Europäisches Patentamt

European Patent Office

Office européen des brevets

(19)

(11) Veröffentlichungsnummer: **0 209 667**
**B1**

(12)

# EUROPÄISCHE PATENTSCHRIFT

(45) Veröffentlichungstag der Patentschrifft:
**17.01.90**

(21) Anmeldenummer: **86106917.7**

(22) Anmeldetag: **21.05.86**

(51) Int. Cl. ⁴: **B 67 D 3/04**, B 67 B 7/86,
F 16 K 17/40, F 16 L 29/00

(54) **Entnahmevorrichtung.**

(30) Priorität: **24.06.85 DE 3522521**

(43) Veröffentlichungstag der Anmeldung:
**28.01.87 Patentblatt 87/05**

(45) Bekanntmachung des Hinweises auf die Patenterteilung:
**17.01.90 Patentblatt 90/03**

(84) Bennante Vertragsstaaten:
**AT BE CH DE FR GB IT LI LU NL SE**

(56) Entgegenhaltungen:
**EP-A-0 124 268
CH-A-157 299
DE-A-1 921 896
DE-A-3 030 989
GB-A-2 096 284**

(73) Patentinhaber: **Sieger Plastic GmbH
Farbmühlenstrasse 11
D-5160 Düren (DE)**

(72) Erfinder: **Dinslage, Wilfried
Mühlenstrasse 16
D-5161 Merzenich (DE)**

(74) Vertreter: **Geissler, Bernhard, Dr. Patent- und
Rechtsanwälte
Bardehle-Pagenberg-Dost- Altenburg-Frohwitter &
Partner Postfach 86 06 20
D-8000 München 86 (DE)**

**Beschreibung**

Die Erfindung betrifft eine Entnahmevorrichtung zur Entnahme eines fließfähigen Produktes aus einem Behälter, wobei die Entnahmevorrichtung auf einen mit dem Behälter verbundenen Auslaufspund aufsetzbar ist und einen rohrförmigen Entnahmekanal aufweist, der durch eine plattenförmige, drehbare Ventilklappe verschließbar ist.

In der Verpackungsindustrie werden Behälter wie z. B. Foliensack-Behälter eingesetzt, die einen fest mit dem Behälter verbundenen Auslaufspund aufweisen. Zur Entnahme, die üblicherweise durch das Eigengewicht des im Behälter befindlichen Produktes oder durch eine Membranpumpe bewirkt wird, wird auf den Auslaufspund eine verschließbare Entnahmevorrichtung aufgesetzt. Die Funktion der bekannten Entnahmevorrichtungen ist unbefriedigend, was sich insbesondere dann zeigt, wenn sich in dem Behälter empfindliche oder umweltgefährdende Stoffe befinden, bei denen eine sehr sorgfältige Dichtung gegenüber der Umgebung bewirkt werden muß. Schwierigkeiten entstehen bei den bekannten Entnahmevorrichtungen weiterhin dann, wenn grobstückige, unter Umständen klebrige Produkte wie beispielsweise Marmelade, entnommen werden sollen.

Ein besonderes Problem bei derartigen Behältern entsteht dadurch, daß der Auslaufspund das Innere des Behälters während des Transportes hermetisch gegen die Umgebung abdichten muß. Diese Abdichtung wird entweder direkt durch die Behälterwand erreicht, auf welcher der Auslaufspund aufgeschweißt ist, oder es wird eine spezielle, in den Auslaufspund eingeschweißte Verschlußplatte aus Kunststoff verwendet. Muß nun diese Abdichtung vor dem Aufsetzen der Entnahmevorrichtung geöffnet werden, hat dies zwei wesentliche Nachteile zur Folge. Zum einen kann ein Teil des Produktes während des Aufsetzens der Entnahmevorrichtung ausfließen, vorausgesetzt, daß sich der Behälter in der entsprechenden Lage befindet. Zum anderen ist es nicht mehr möglich, das Innere der Entnahmevorrichtung und des Auslaufspundes nach dem Aufsetzen der Entnahmevorrichtung zu desinfizieren, was dann von wesentlicher Bedeutung ist, wenn in dem Behälter empfindliche organische Stoffe, wie z. B. Nahrungsmittel, verpackt sind.

In der DE-A-1 921 896 ist eine Drosselvorrichtung beschrieben, die als drehbare Ventilklappe innerhalb eines rohrförmigen Kanales ausgebildet ist. Dabei ist die Ventilklappe nach außen hin abgedichtet, ohne hierzu eine Stopfbüchse verwenden zu müssen.

Aus der GB-A-2 096 284 ist eine Entnahmevorrichtung an einem Behälter insbesondere für Wein bekannt, bei welcher durch Herabdrücken eines Knopfes sowohl ein Ventilglied als auch ein Öffner betätigbar sind, der entweder einen Verschluß durchstößt oder einen Kolben in seine Offenlage bewegen kann, so daß dem Behälter das entsprechende Fluid entnehmbar ist.

Schließlich ist in der EP-A-0 124 268 eine Vorrichtung zum Entnehmen von Flüssigkeit aus einem in einem Karton angeordneten flexiblen Behälter beschrieben. Durch axialen Druck dreht sich ein Kolben spiralförmig, der an einer Innenwand gleitet und somit eine Leckage ausschaltet. Gleichzeitig bewegt der Kolben auch ein den Behälter durchstoßendes Element derart, daß in letzteren keine Luft einströmen kann.

Die vorliegende Erfindung stellt sich deshalb die Aufgabe, eine Entnahmevorrichtung zu schaffen, die eine gute Abdichtung gegenüber der Umgebung aufweist und die einfach und zuverlässig bedienbar ist.

Diese Aufgabe wird bei einer Entnahmevorrichtung der eingangs genannten Art erfindungsgemäß durch den kennzeichnenden Teil des Anspruchs 1 gelöst.

Zweckmäßige weitere Ausgestaltungen der erfindungsgemäßen Entnahmevorrichtung ergeben sich aus den Ansprüchen 2 bis 8.

Durch die erfindungsgemäße Lösung wird eine präzise funktionierende Abdichtung zwischen dem Behälterinnern und der Umgebung erreicht. Die Verwendung der drehbaren Ventilklappe ermöglicht es des weiteren, die Entnahme fein zu dosieren, wobei, wenn eine rasche Entnahme gewünscht ist, die Ventilklappe parallel zum Entnahmekanal gestellt werden kann, wodurch dem Produkt ein großer Strömungsquerschnitt für das Ausfließen zur Verfügung steht. Trotz der feinen Dosiermöglichkeit erfüllt die erfindungsgemäße Entnahmevorrichtung ihre Funktion auch dann einwandfrei, wenn grobstückige und/oder klebrige Materialien entnommen werden. Da die Messerhülse rohrförmig gestaltet ist, wird die Strömung des Produktes durch den Entnahmekanal bzw. durch die Messerhülse nur unwesentlich behindert.

Dabei erfolgt die Lagerung der Ventilklappe durch Achsstummel, die mit letzterer einstückig verbunden oder mit dieser verschweißt sind. Diese Achsstummel sind so gelagert, daß ihre Drehachse mit einer Trennfuge im Gehäuse der Entnahmevorrichtung zusammenfällt. Dadurch wird die Montage der Ventilklappe erheblich erleichtert. Die umlaufende Dichtung ist dabei vorzugsweise in das Gehäuse eingelegt.

Bei einem Auslaufspund mit einer querlaufenden Verstärkungsrippe ist die Messerhülse dem verbleibenden Querschnitt des Auslaufspundes angepaßt. Dann wird in den Entnahmekanal ein Quersteg eingesetzt, der ein Ausweichen des Messers bei dem Schneidevorgang verhindert. Bei einer desinfizierbaren Entnahmevorrichtung kann dieser Quersteg durch das Zuführungsrohr für die Desinfektionsflüssigkeit bzw. den Desinfektionsdampf gebildet sein.

Falls Desinfektionsflüssigkeit oder Heißdampf durch eine entsprechende Bohrung in die Entnahmevorrichtung geführt werden soll, muß für eine entsprechende Abflußmöglichkeit gesorgt werden. Für die Verwendung bei der Heißdampf-Sterilisation ist die Messerhülse an der der Ventilklappe zugewandten Seite auf einer Seite abgeschrägt, so daß die Ventilklappe um einen bestimmten Winkel gedreht werden kann, ohne daß dies zu einem Durchstechen der Ventilplatte des Auslaufspundes führt. Der durch die Zuführbohrung eingeleitete Heißdampf kann problemlos über die teilweise geöffnete Ventilklappe entweichen.

Falls mit der Entnahmevorrichtung eine sich über einen längeren Zeitraum, z. B. mehrere Wochen, erstreckende sterile Entnahme möglich sein soll, ist ein Kanal vorgesehen, durch den eine Desinfektionsflüssigkeit strömen kann. Somit ist es möglich, ein Durchwachsen von Bakterien durch die Dichtungen zu verhindern. Durch die Verwendung von entsprechenden Zuführungs- und Abführungsbohrungen kann die Entnahmevorrichtung dabei so gestaltet sein, daß ein stetiger Umlauf der Desinfektionsflüssigkeit möglich ist.

Da die Ventilklappe durch eine Kulissenführung in verschiedenen Stellungen arretiert werden kann, wird verhindert, daß die Entnahmevorrichtung unabsichtlich geöffnet wird oder die Durchstoßung der Verschlußplatte durch die Messerhülse versehentlich erfolgt.

Weitere Merkmale, Vorteile und Anwendungsmöglichkeiten der Erfindung ergeben sich aus der nachfolgenden Beschreibung von Ausführungsbeispielen in Verbindung mit der Zeichnung.

Darin zeigen:

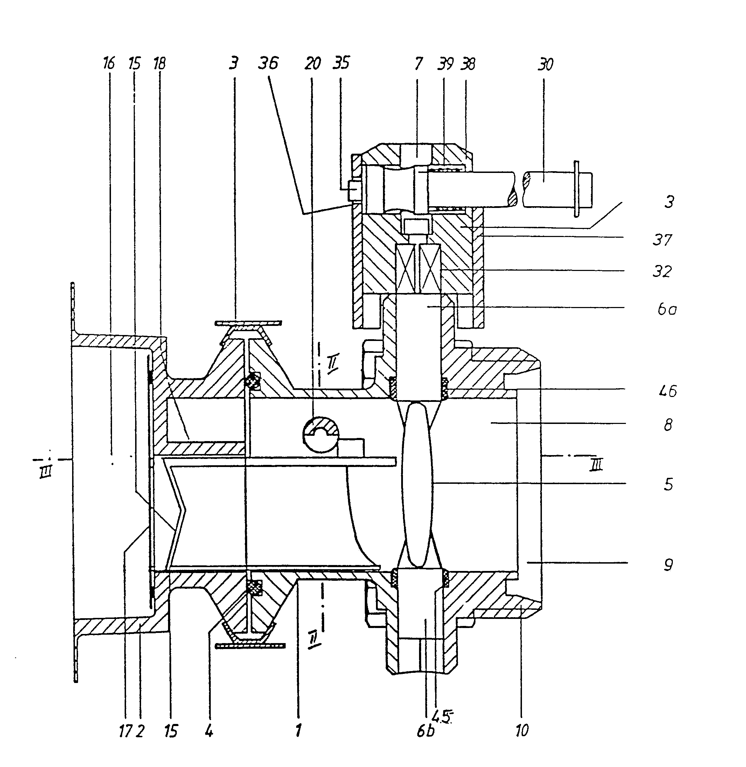

Fig. 1   einen Querschnitt durch eine erste Ausführungsform einer Entnahmevorrichtung entlang der Linien I - I in Fig. 2;

Fig. 2   eine Schnittansicht entlang der Linie II - II in Fig. 1 ;

Fig. 3   eine Schnittansicht entlang der Linie III - III in Fig. 2;

Fig. 4   einen Querschnitt durch eine weitere Ausführungsform;

Fig. 5   die sterile Ausgestaltung der Gehäusedichtungen.

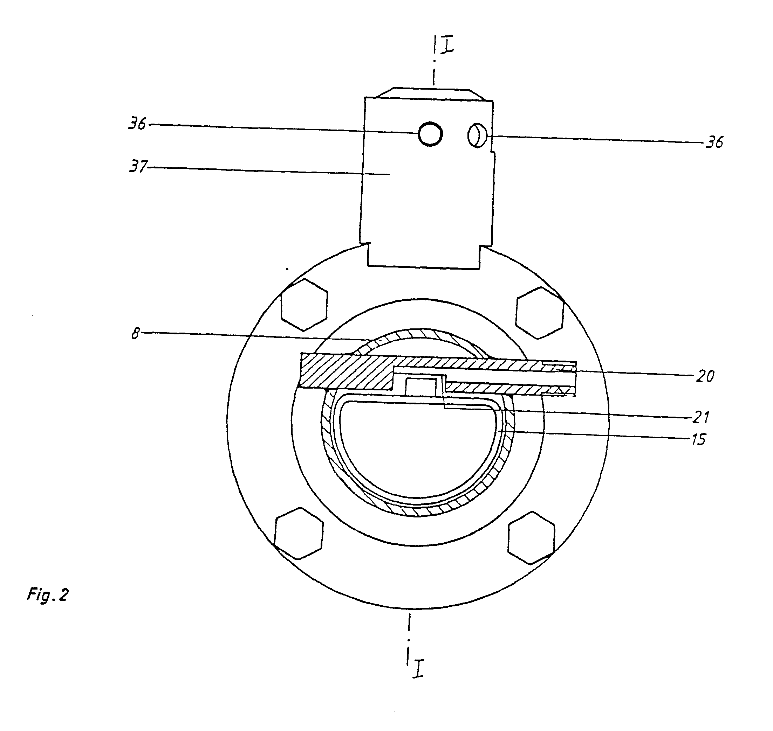

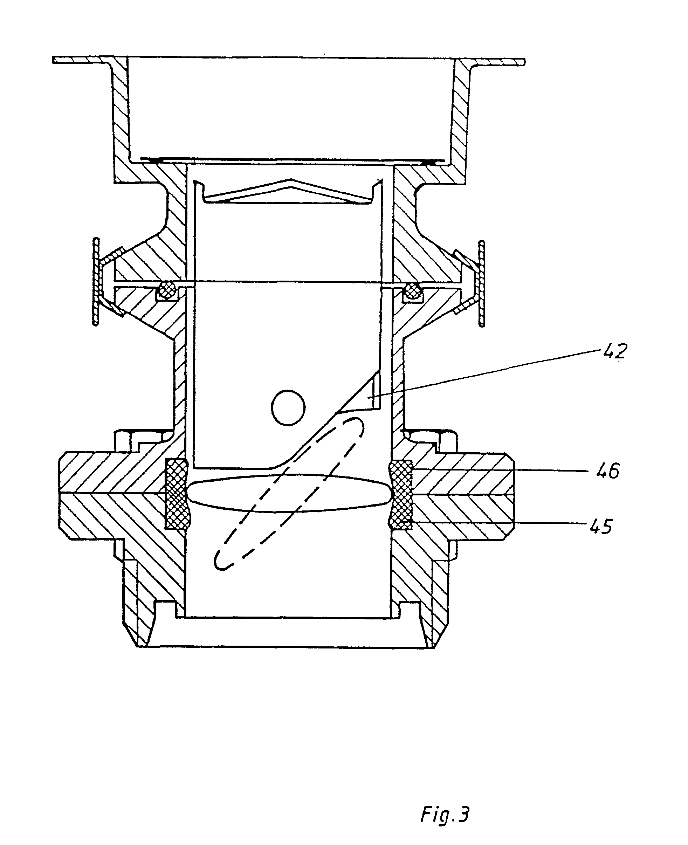

Eine Entnahmevorrichtung 1 ist auf einen Auslaufspund 2 aufgesetzt und mit diesem durch ein Schellenband 3 fest verbunden. In die Entnahmevorrichtung ist eine Ventilklappe 5 eingesetzt und mit Achsstummeln 6a und 6b im Gehäuse gelagert. Achsstummel und Ventilklappe sind miteinander verschweißt. Die Achse der Lagerbohrung für die Achsstummel fällt mit einer Gehäusetrennfuge 7 zusammen, so daß die Ventilklappe 5 problemlos montiert werden kann. Ein durch die Ventilklappe 5 verschlossener Entnahmekanal 8 weist einen kreisförmigen Querschnitt auf, wie dies in Fig. 2 gezeigt ist. Das dem Auslaufspund abgewandte Ende der Entnahmevorrichtung weist einen Kegelansatz 9 und ein Außengewinde 10 auf, so daß ein entsprechend gestalteter Ausfluß oder auch eine entsprechend gestaltete Verbindung zu einer Förderpumpe aufgesetzt werden kann.

In den Entnahmekanal ist eine rohrförmige Messerhülse 15 eingesetzt, die mittels der Ventilklappe 5 so in Richtung auf den Auslaufspund hin bewegt werden kann, daß die Messerschneide 16 eine Verschlußplatte 17 des Auslaufspundes durchstoßen kann. Da der Auslaufspund in dem gezeigten Ausführungsbeispiel einen Verstärkungssteg 18 aufweist, ist die Messerhülse so gestaltet, daß sie dem verbleibenden Öffnungsquerschnitt des Auslaufspundes angepaßt ist. In die Entnahmevorrichtung ist ein Rohr 20 eingeschweißt, über das eine Desinfektionsflüssigkeit oder Heißdampf in das Innere der Entnahmevorrichtung eingeleitet werden kann. Das Desinfektionsmittel bzw. der Heißdampf entströmen diesem Rohr durch eine Öffnung 21. Das Rohr bildet gleichzeitig ein Gegenlager für die Messerhülse, um eine Ausweichbewegung der Messerhülse beim Durchstoßen der Ventilklappe zu verhindern. Falls die Entnahmevorrichtung nicht für eine sterile Entnahme vorgesehen ist, kann statt dieses Zuführungsrohres auch ein Quersteg 22 angesetzt werden, wie dies in Fig. 4 gezeigt ist. Die Bewegung der Ventilklappe erfolgt über eine Betätigungsstange 30, die in die Bohrung eines Mitnehmers 31 eingreift. Der Mitnehmer ist über eine vierkantförmige Ausnehmung 32 mit einem entsprechenden Vierkant am Achsstummel 6a verbunden. Die Betätigungsstange weist einen zapfenförmigen Ansatz 35 auf, der in entsprechende Arretierbohrungen 36 einer Arretierhülse 37 eingreift. Die Arretierhülse 37 ist fest mit der Entnahmevorrichtung verbunden. Der zapfenförmige Ansatz 35 der Betätigungsstange 30 wird durch eine Feder 39 in die Arretierbohrungen 36 gedrückt. Bei der Betätigung kann der zapfenförmige Ansatz durch eine entsprechende Bewegung der Betätigungsstange 30 gegen die Wirkung der Feder 39 aus der Arretierbohrung herausbewegt werden, so daß eine Drehung des Mitnehmers und damit des Achsstummels und der Ventilklappe möglich ist.

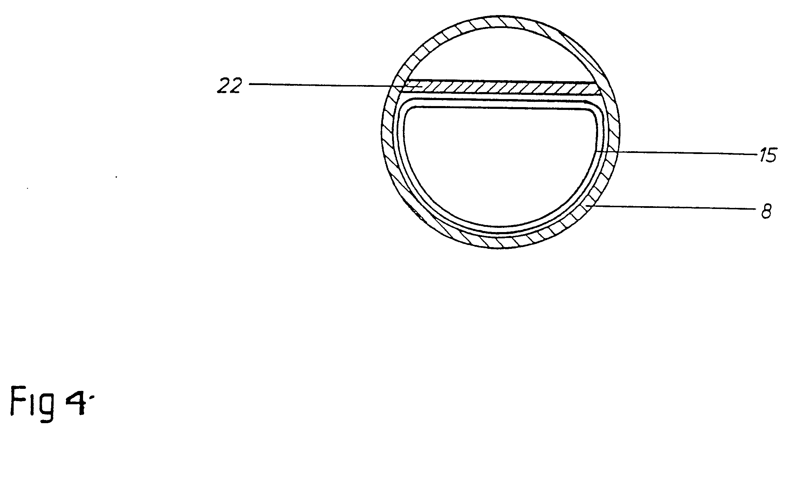

Wie in Fig. 3 gezeigt ist, weist die Messerhülse an der der Ventilklappe zugewandten Seite eine Abschrägung 42 auf. Diese Abschrägung ermöglicht es, daß die Ventilklappe um einen kleinen Winkel in die in Fig. 3 gestrichelt gezeigte Lage gedreht werden kann, ohne daß die Messerhülse 15 die Verschlußplatte 17 durchstößt. Die Verschlußklappe kann in dieser Stellung durch eine entsprechende Bohrung in der Arretierhülse 37 für den Zapfen 35 arretiert werden.

Die Desinfektion kann dann so erfolgen, daß zunächst die Entnahmevorrichtung auf den Auslaufspund aufgesetzt und mit dem Schellenband 3 befestigt wird. Dann wird die Ventilklappe in die in Fig. 3 gestrichelt dargestellte Position gedreht und mit Hilfe der Kulissenführung arretiert. Anschließend kann Heißdampf eingeleitet werden, der den äußeren Teil des Auslaufspundes, das Innere der Entnahmevorrichtung, die Messerhülse und die Ventilklappe selbst desinfiziert. Der Dampf tritt durch die etwas geöffnete Ventilklappe aus. Nach der erfolgten Desinfektion wird die Ventilklappe in die andere Richtung gedreht, so daß das Durchstoßen der Verschlußplatte 17 mit der Messerhülse 15 erfolgt.

Die Abdichtung der Ventilklappe erfolgt durch

eine Dichtung 45, die in eine entsprechende Aussparung 46 im Gehäuse der Entnahmevorrichtung eingelegt ist und Durchbrüche für die Achsstummel 6a und 6b aufweist.

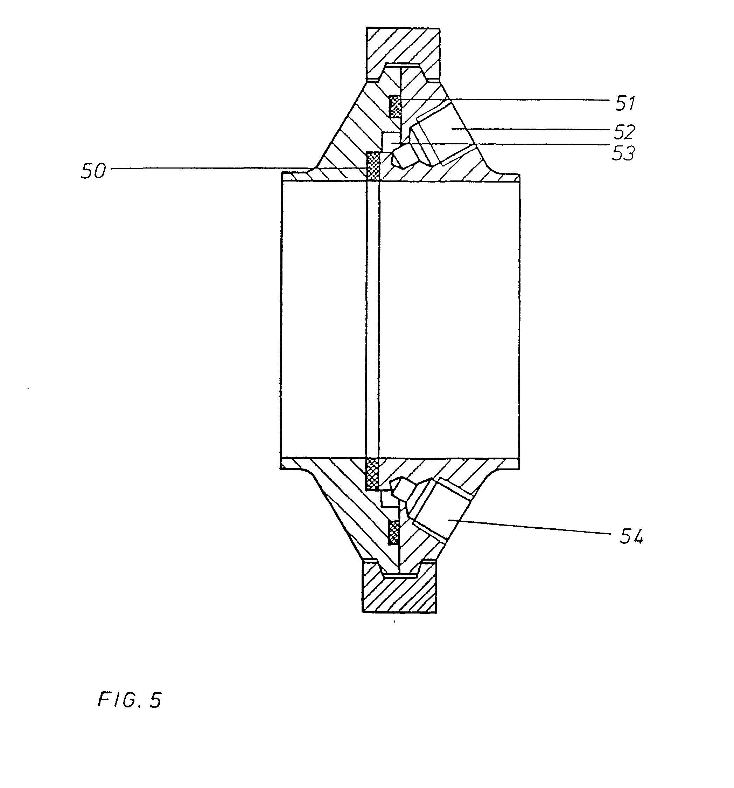

Wenn eine sterile Entnahme über mehrere Wochen möglich sein soll, müssen die Dichtungen von einer desinfizierenden Flüssigkeit umspült werden. Ein Ausführungsbeispiel für eine derartige Dichtungsanordnung ist in Fig. 5 gezeigt. Die Entnahmevorrichtung wird durch eine erste Dichtung 50 nach außen abgedichtet. Zusätzlich ist eine zweite Dichtung 51 vorgesehen, die den Kanal 52 für die Durchströmung der Desinfektionsflüssigkeit abdichtet. Die Desinfektionsflüssigkeit wird durch eine Zuführbohrung 53 zugeführt und fließt durch eine Abführbohrung 54 ab. Mit dieser Anordnung ist es zum einen möglich, die Verbindung zwischen dem Auslaufspund und der aufgesetzten Entnahmevorrichtung gegen ein Durchwachsen von Bakterien zu sichern. Des weiteren kann aber auch bei einer entsprechenden Anordnung die Dichtung der Ventilklappe durch eine desinfizierende Flüssigkeit geschützt werden.

## Patentansprüche

1. Entnahmevorrichtung zur Entnahme eines fließfähigen Produktes aus einem Behälter, wobei die Entnahmevorrichtung auf einen mit dem Behälter verbundenen Auslaßspund aufsetzbar ist und einen rohrförmigen Entnahmekanal aufweist, der durch eine plattenförmige, drehbare Ventilklappe verschließbar ist, *dadurch gekennzeichnet*, daß in den Entnahmekanal eine rohrförmige Messerhülse (15) eingelegt ist, die eine zu dem Auslaufspund gerichtete Messerschneide aufweist, wobei die Messerhülse beim Drehen der Ventilklappe durch diese so auf den Auslaufspund (2) zu bewegt wird, daß eine den Behälter abdichtende Verschlußplatte (17) von der Messerhülse durchstoßen wird.

2. Entnahmevorrichtung gemäß Anspruch 1 dadurch gekennzeichnet, daß die Messerhülse (15) an ihrem zur Ventilklappe (5) weisenden Ende eine Abschrägung (42) aufweist, die derart gestaltet ist, daß die Ventilklappe (5) teilweise geöffnet werden kann, ohne daß die Messerhülse (15) auf die Verschlußplatte (17) zubewegt wird.

3. Entnahmevorrichtung gemäß Anspruch 1 oder 2, dadurch gekennzeichnet, daß in dem Gehäuse der Entnahmevorrichtung ein Gegenlager (20, 22) vorgesehen ist, welches eine Ausweichbewegung der Messerhülse (15) verhindert.

4. Entnahmevorrichtung gemäß mindestens einem der vorhergehenden Ansprüche, dadurch gekennzeichnet, daß die Ventilklappe durch eine Kulissenführung in verschiedene Stellungen arretiert werden kann.

5. Entnahmevorrichtung gemäß mindestens einem der vorhergehenden Ansprüche, dadurch gekennzeichnet, daß eine Bohrung zur Zuführung eines Desinfektionsmittels oder von Heißdampf vorgesehen ist.

6. Entnahmevorrichtung gemäß mindestens einem der vorhergehenden Ansprüche, dadurch gekennzeichnet, daß in den Dichtfugen der Entnahmevorrichtung ein von einer Desinfektionsflüssigkeit durchströmbarer Kanal (52) vorgesehen ist, der durch eine zweite Dichtung (51) gegenüber der Umgebung abgedichtet ist.

7. Entnahmevorrichtung gemäß mindestens einem der vorhergehenden Ansprüche, dadurch gekennzeichnet, daß der Entnahmekanal (8) einen kreisförmigen Querschnitt aufweist.

8. Entnahmevorrichtung gemäß mindestens einem der vorhergehenden Ansprüche, dadurch gekennzeichnet, daß die Entnahmevorrichtung aus Edelstahl besteht.

## Claims

1. Discharge device for discharging a flowable product from a container, where the discharge device is mounted on an outlet plug connected to the container and comprises a tube-shaped discharge channel, which is closeable by a platelike, rotatable valve flap, *characterized in that* a tube-shaped knife sleeve (15) is inserted in the discharge channel, which comprises a cutting edge directed to the output plug, where when rotating the valve flap, said knife sleeve is moved by said flap toward the output plug (2), so that a closure plate (17) sealing the container is penetrated by the knife sleeve.

2. Discharge device according to claim 1, characterized in that the knife sleeve (15) comprises an inclination (42) on its end facing the valve flap (5), which is so configured that the valve flap (5) can be partially opened, without the knife sleeve (15) being moved to the closure plate (17).

3. Discharge device according to claim or 2, characterized in that a counter support (20, 22) is provided in the housing of the discharge device, which prevents a deviation in the movement of the knife sleeve (15).

4. Discharge device according to at least one of the preceding claims, characterized in that the valve flap can be fixed in different positions by a link connection.

5. Discharge device according to at least one of the previous claims, characterized in that a boring is provided for introducing disinfection material or hot steam.

6. Discharge device according to at least one of the preceding claims, characterized in that a channel (52) passable for a flow of disinfection fluid is provided in the sealing seam of the discharge device, which is sealed from the surroundings by a second seal (51).

7. Discharge device according to at least one of the preceding claims, characterized in that the discharge channel (8) comprises a circular cross-section.

8. Discharge device according to at least one of the preceding claims, characterized in that the discharge device consists of refined steel.

**Revendications**

1. Dispositif de prélèvement pour le prélèvement d'un produit coulant hors d'un réservoir, le dispositif de prélèvement étant monté sur un réservoir d'écoulement connecté à un tubulaire d'écoulement et comprenant un canal de prélèvement en forme de tube, qui peut être fermé par un clapet de soupape rotatif en forme de plaque *caractérisé en ce qu'* un guide-lame (15) tubulaire comprenant un tranchant de couteau dirigé vers le tubulaire d'écoulement est placé dans le canal de prélèvement, le guide-lame étant déplacé vers le tubulaire d'écoulement (2) par le clapet de soupape durant la rotation de celui-ci, de telle façon, qu'une plaque d'obturation (17) rendant le réservoir étanche est traversée par le guide-lame.

2. Dispositif de prélèvement selon la revendication 1, caractérisé en ce que à son extrémité du côté du clapet de soupape (5) le guide-lame (15) comprend une inclinaison (42) formée de telle sorte que le clapet de soupape (5) peut être ouvert partiellement sans que le guide-lame (15) ne soit déplacé vers la plaque d'obturation (17).

3. Dispositif de prélèvement selon la revendication 1 ou 2, caractérisé en ce qu'une butée (20, 22), qui évite une déviation du guide-lame (15), est prévue dans le boîtier du dispositif de prélèvement.

4. Dispositif de prélèvement selon au moins une des revendications précédentes, caractérisé en ce que le clapet de soupape peut être bloqué dans différentes positions par un guide de coulisse.

5. Dispositif de prélèvement selon au moins une des revendications précédentes, caractérisé en ce qu'un perçage est prévu pour l'introduction d'un désinfectant ou de vapeurs chaudes.

6. Dispositif de prélèvement selon au moins une des revendications précédentes, caractérisé en ce qu'un conduit (52), à travers lequel un fluide de désinfection peut circuler, et, qui est rendu étanche par rapport au milieu environant par une deuxième garniture d'étanchéité (51), est prévu dans les joints d'étanchéité du dispositif de prélèvement.

7. Dispositif de prélèvement selon au moins une des revendications précédentes, caractérisé en ce que le canal de prélèvement (8) a un diamètre circulaire.

8. Dispositif de prélèvement selon au moins une des revendications précédentes, caractérisé en ce que le dispositif de prélèvement est en acier fin.

Fig. 1

Fig.2

42

46

45

Fig.3

22 —

—15

—8

Fig 4·

FIG. 5